# EUROPÄISCHE PATENTSCHRIFT

(11) **EP 1 559 922 B1**
(45) Veröffentlichungstag und Bekanntmachung des Hinweises auf die Patenterteilung: **28.11.2007**
(21) Anmeldenummer: 05001669.0
(22) Anmeldetag: 27.01.2005
(51) Int. Cl.: F16D 25/08, F16D 25/0638

(54) **Kupplung**
Clutch
Embrayage

(30) Priorität: 28.01.2004 DE 102004005075
(43) Veröffentlichungstag der Anmeldung: 03.08.2005
(73) Patentinhaber: Desch Antriebstechnik GmbH & Co. KG, 59759 Arnsberg (DE)
(72) Erfinder: Geilker, Uwe, 59757 Arnsberg (DE); Plattfaut, Bernhard, 59069 Hamm (DE); Desch, Alexander P., 59757 Arnsberg (DE)
(74) Vertreter: Basfeld, Rainer

(56) Entgegenhaltungen:
- WO-A-01/96759
- WO-A-20/04001252
- DE-C- 647 031
- GB-A- 725 571
- US-A- 2 061 990
- US-A- 2 888 087
- US-A1- 2003 183 474

## Beschreibung

Die vorliegende Erfindung betrifft eine Kupplung gemäß dem Oberbegriff des Anspruchs 1. Eine solche Kupplung mit Kolben und Zylinder unmittelbar auf einen Abschnitt der Welle ist aus US 2003/0183474 A1 bekannt.

Kupplungen der eingangs genannten Art sind aus dem Stand der Technik bekannt. Derartige Kupplungen sind hinsichtlich ihrer Dimensionierung der Gesamtgröße von dem hierfür vorgesehenen Einbauraum in den Baumaschinen abhängig, für die die Kupplungen zum Einsatz kommen. Es werden besondere Anforderungen an die Kompaktheit solcher Kupplungen gestellt, was zu Lasten der Dimensionierbarkeit des maximal übertragbaren Drehmomentes durch die Kupplung geht. Bei Kupplungen der eingangs genannten Art wird das Drehmoment von einem treibenden Kupplungsteil über eine Kupplungsnabe auf eine Welle übertragen. Die Kupplungsnabe ist hierzu durch eine Passfeder formschlüssig mit der Welle verbunden. Zur Überführung der Kupplung aus einer ersten Position in eine zweite Position sind Schaltmittel vorgesehen, die auf der Kupplungsnabe verschiebbar angeordnet sind. Die Kupplungsnabe ist als Gussteil ausgeführt, während die Schaltmittel aus Stahl bestehen. Aufgrund des Grafitgehaltes der Kupplungsnabe sind die aus Stahl bestehenden Schaltmittel auf der Kupplungsnabe gleitend verschiebbar.

Als Nachteilig an derartigen Kupplungen erweist sich, das aufgrund der für den Einbau einer solchen Kupplung nur sehr beschränkt zur Verfügung stehende Einbauraum die Dimensionierung der Kupplung hinsichtlich des übertragbaren Drehmomentes beschränkt. Maßgeblich für die Größenordnung des von der Kupplung übertragbaren Drehmomentes ist die Dimensionierung der Welle. Der Einsatz einer Kupplung der eingangs genannten Art für Baumaschinenantriebe erfordert eine hohe Robustheit der Kupplung. Des Weiteren treten an der Kupplung Drehschwingungen auf, die auf die Welle übertragen werden, wodurch die Belastbarkeit der Welle stark eingeschränkt wird. Um diesen Anforderungen und Einflüssen gerecht zu werden, ist eine Vergrößerung des Wellendurchmessers erforderlich, was jedoch aufgrund der vorgegebenen Gesamtgröße der Kupplung, insbesondere in Umfangsrichtung der Welle, nicht oder nur sehr eingeschränkt möglich ist. Insbesondere die zur Übertragung des Drehmomentes erforderliche Kupplungsnabe, die sich in axialer Richtung über die Welle erstreckt und der Lagerung der Schaltmittel dient, setzt der Dimensionierung der Welle bei einer vorgegebener Gesamtgröße der Kupplung in radialer Richtung Grenzen.

Aufgabe der vorliegenden Erfindung ist es, eine Kupplung der eingangs genannten Art bereitzustellen, die eine Erhöhung des übertragbaren Drehmomentes unter Beibehaltung der vorgegebenen Gesamtgröße der Kupplung zulässt.

Diese Aufgabe wird erfindungsgemäß dadurch gelöst, dass die Schaltmittel einen Zylinder, einen Kolben sowie ein Übertragungselement umfassen, die im Wesentlichen koaxial zu der Antriebswelle angeordnet sind, wobei die Schaltmittel unmittelbar auf einem Abschnitt der Welle angeordnet sind, wobei die Schaltmittel sich einander zumindest Anordnung abschnittsweise überlappend angeordnet sein. Dadurch, dass die Schaltmittel unmittelbar auf der Welle angeordnet sind und nicht wie im Stand der Technik vorgesehen auf einer Kupplungsnabe, die wiederum zur Drehmomentübertragung auf der Welle angeordnet ist, kann die Welle erfindungsgemäß entsprechend der Durchmesserdifferenz der Kupplungsnabe größer dimensioniert werden, wodurch höhere Drehmomente übertragbar sind.

Durch die überlappende wird eine kompakte Bauweise der Kupplung erzielt.

Weiterhin kann das Schaltmittel zumindest teilweise auf der Antriebswelle axial verschiebbar sein.

Vorzugsweise kann der Zylinder einen im Wesentlichen U-förmigen Querschnitt aufweisen. Dabei kann der Kolben zumindest abschnittsweise von dem Zylinder umgeben sein, wobei der Kolben gegenüber dem Zylinder durch eine ringförmige Dichtung abgedichtet wird. Weiterhin kann das Übertragungselement einen im Wesentlichen U-förmigen Querschnitt aufweisen. Insbesondere kann das Übertragungselement den Zylinder und den Kolben zumindest abschnittsweise umgeben. Auf diese Weise wird eine kompakte Anordnung der Schaltmittel erreicht, ohne die Funktionalität der Schaltmittel zu einzuschränken.

Des Weiteren kann die Kupplung eine erste und eine zweite Druckscheibe umfassen, die koaxial zu der Welle angeordnet sind. Weiterhin kann zwischen der ersten Druckscheibe und der zweiten Druckscheibe mindestens ein Reibelement angeordnet sein. Das mindestens eine Reibelement kann auf seinem äußeren Umfang eine Verzahnung aufweisen, die mit einem Zahnkranz, der an dem treibenden Kupplungsteil angeordnet sein kann, in Eingriff steht.

Vorteilhafterweise kann zwischen der ersten Druckscheibe und der zweiten Druckscheibe mindestens eine Feder angeordnet sein. In der ersten Position der Kupplung werden die beiden Druckscheiben durch die Federkraft der im Wesentlichen koaxial zu der Welle angeordneten Feder zueinander beabstandet, so dass zwischen dem treibenden Kupplungsteil und der Welle keine kraftschlüssige Verbindung besteht. Das mindestens eine Reibelement kann auf diese Weise zwischen den beiden Druckscheiben umlaufen, wobei kein Drehmoment übertragen wird.

Insbesondere kann die Welle einen im Wesentlichen flanschförmigen Abschnitt aufweisen, an dem die zweite Druckscheibe zumindest abschnittsweise anliegt. Dabei kann der Abschnitt in Umfangsrichtung angeordnete Bohrungen aufweisen, die der Aufnahme von Verbindungselementen dienen, mittels derer die zweite Druckscheibe formschlüssig mit der Welle verbindbar ist. Über diese Verbindung kann das in die Kupplung eingeleitete Drehmoment in der zweiten Position der Kupplung auf die Welle übertragen werden.

Vorzugsweise kann die erste Druckscheibe auf dem äußeren Umfang des Übertragungselementes angeordnet sein. Dabei können die erste Druckscheibe und das Übertragungselement formschlüssig miteinander in Eingriff stehen. Hierzu kann an dem äußeren Umfang des Übertragungselementes ein flanschförmiger Absatz angeordnet sein sowie an dem inneren Umfang der ersten Druckscheibe eine dem Absatz entsprechende Ausnehmung.

Insbesondere kann der Kolben aus einer Rotgusslegierung bestehen. Somit ist es nicht erforderlich, den Kolben auf der Welle gleitend zu lagern, um zwischen der Welle und dem Kolben auftretende Haftreibung zu verhindern, die zur Zerstörung der Oberflächen der Welle und des Kolbens führt, wenn sowohl die Welle als auch der Kolben aus Stahl bestehen, wie es im Stand der Technik vorgesehen ist. Vorteilhafterweise kann der Kolben aus einem nichtmetallischen Werkstoff bestehen, der hinsichtlich der Festigkeit des verwendeten Materials die gleichen Eigenschaften aufweist, wie ein metallischer Werkstoff.

Vorzugsweise kann der Kolben in axialer Richtung der Welle gleitend verschiebbar sein. Weiterhin kann das Übertragungselement gegenüber dem Zylinder verschiebbar angeordnet sein. Dabei ist das Übertragungselement, das den Zylinder zumindest abschnittsweise umgibt.

Insbesondere können der Zylinder und der Kolben einen Hohlraum einschließen, in den durch eine in dem Inneren der Welle angeordnete Zuleitung ein mit Druck beaufschlagtes Medium zuführbar ist. Bei dem Medium handelt es sich vorzugsweise um Hydrauliköl. Alternativ können die Schaltmittel derart ausgeführt sein, dass die Kupplung pneumatisch betätigbar ist. Der Kolben drückt das Übertragungselement mit einer dem Öldruck proportionalen Kraft gegen die erste Druckscheibe. Die erste Druckscheibe wird in Richtung von der zweiten Druckscheibe gedrückt, wodurch es zwischen den beiden Druckscheiben und dem mindestens einen Reibelement zu einer reibschlüssigen Verbindung kommt.

Vorzugsweise kann die Welle auf ihrer von dem Kupplungsgehäuse abgewandten Seite einen Anschluss aufweisen, der der Zufuhr des Mediums dient.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Schnittansicht einer erfindungsgemäßen Kupplung;
- Fig. 2: eine perspektivische Ansicht der Kupplung gemäß Fig. 1;
- Fig. 3: eine perspektivische Teilansicht der Kupplung gemäß Fig. 2.

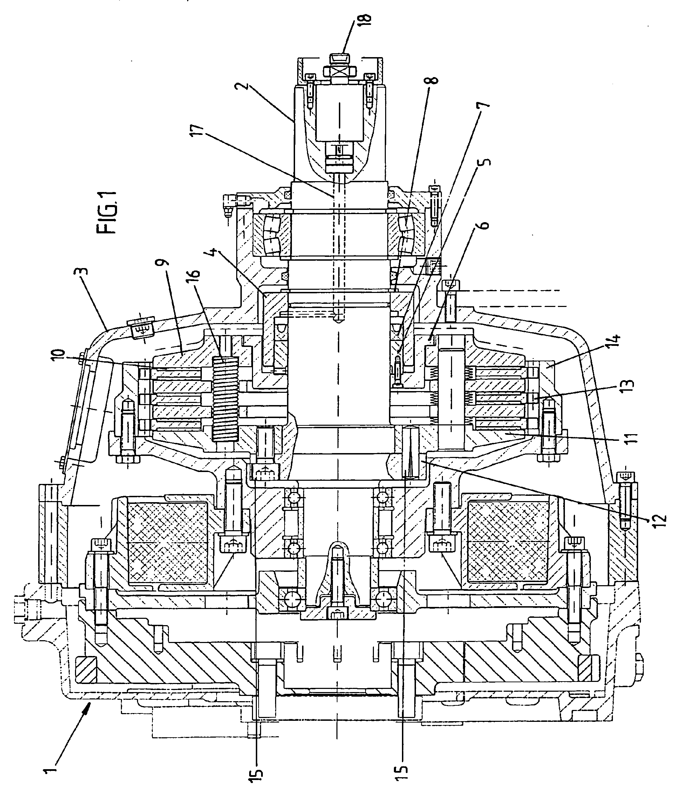

Zunächst wird auf Fig. 1 Bezug genommen. Die erfindungsgemäße Kupplung, die insbesondere für Baumaschinenantriebe zum Einsatz kommt, umfasst einen treibenden Kupplungsteil 1 sowie eine Welle 2, die zumindest abschnittsweise von einem Kupplungsgehäuse 3 umgeben sind. Ein Ende der an dem Kupplungsgehäuse 3 drehbar gelagerten Welle 2 ragt zumindest abschnittsweise aus dem Kupplungsgehäuse 3 hervor. Die Seite der Welle 2, die aus dem Kupplungsgehäuse 3 herausragt, wird nachfolgend als Abtriebsseite der Kupplung bezeichnet.

Auf einem der Abtriebsseite zugewandten Abschnitt der Welle 2 sind unmittelbar auf der Oberfläche der Welle 2 Schaltmittel angeordnet, mittels derer die Kupplung aus einer ersten Position, in der zwischen dem treibenden Kupplungsteil 1 und der Welle 2 keine kraftschlüssige Verbindung besteht, in eine zweite Position überführbar ist, in der die Welle 2 mit dem treibenden Kupplungsteil 1 kraftschlüssig verbunden ist. Die im Wesentlichen koaxial zu der Welle 2 angeordneten Schaltmittel umfassen einen Zylinder 4, der einen im Wesentlichen U-förmigen Querschnitt aufweist, einen im Wesentlichen ringförmigen Kolben 5 sowie ein Übertragungselement 6, das einen im Wesentlichen U-förmigen Querschnitt aufweist. Der Zylinder 4 und das Übertragungselement 6 bestehen vorzugsweise aus Stahl, während der Kolben 5 aus Rotguss besteht. Der Kolben 5 kann jedoch auch aus einem nichtmetallischen Werkstoff bestehen.

Um einen platzsparenden Aufbau der Kupplung zu erzielen, sind die Schaltmittel einander zumindest abschnittsweise überlappend auf der Welle 2 angeordnet. Auf der der Abtriebsseite zugewandten Seite des Zylinders 4 ist auf der Welle 2 ein Sicherungsring 8 angeordnet, der den Zylinder 4 gegen eine axiale Verschiebung in Richtung von der Abtriebsseite der Kupplung sichert. In dem Inneren des Zylinders 4 sind eine ringförmige Dichtung 7 sowie der Kolben 5 gegenüber dem Zylinder 4 axial verschiebbar angeordnet, wobei der Kolben 5 gegenüber dem Zylinder 4 durch die Dichtung 7 abgedichtet wird.

Auf der der Abtriebsseite zugewandten Seite des Übertragungselementes 6 liegt der Kolben 5 zumindest abschnittsweise an dem Übertragungselement 6 an. Das im Wesentlichen U-förmige Übertragungselement 6 erstreckt sich koaxial zu der Welle 2 in Richtung der Abtriebsseite und umgibt den Kolben 5 und den Zylinder 4 zumindest abschnittsweise. Weiterhin weist das Übertragungselement 6 auf seiner von der Welle 2 abgewandten Seite auf seinem äußeren Umfang einen flanschförmigen Absatz auf, an dem eine erste Druckscheibe 9 im Wesentlichen formschlüssig anliegt. Hierzu weist die erste Druckscheibe 9 auf ihrer der Abtriebsseite zugewandten Seite an ihrem inneren Umfang eine dem Absatz des Übertragungselementes 6 entsprechende Ausnehmung auf.

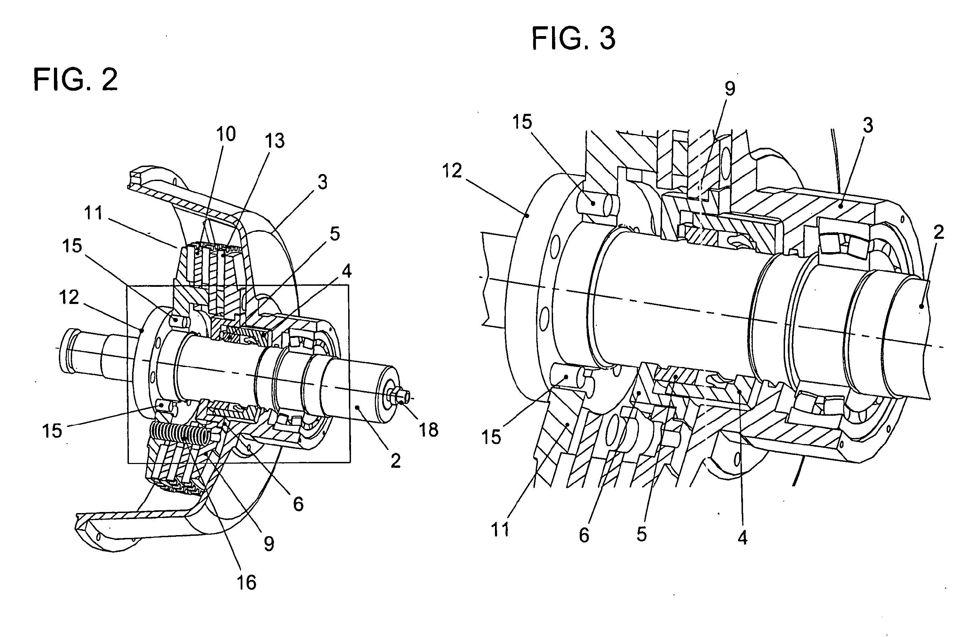

Die Welle 2 weist auf ihrer von der Abtriebsseite abgewandten Seite einen im Wesentlichen flanschförmigen Abschnitt 12 auf, an dem eine zweite Druckscheibe 11 angeordnet ist, wie in den Fig. 2 und 3 dargestellt. Der flanschförmige Abschnitt 12 sowie die zweite Druckscheibe 11 sind mit einer Vielzahl von koaxial zur Welle 2 angeordneten Bohrungen ausgeführt, die in ihrer Anzahl und Lage einander entsprechend an dem Abschnitt 12 und der zweiten Druckscheibe 11 angeordnet sind. Die Bohrungen dienen der Aufnahme von Verbindungselementen 15, um die Welle 2 und die zweite Druckscheibe 11 drehfest miteinander zu verbinden. Die Verbindungselemente 15 sind vorzugsweise als Stifte ausgeführt, beispielsweise als Bolzen und/oder Schrauben. Die Welle 2 ist vorzugsweise einteilig ausgeführt, wobei der Abschnitt 12 bei der Herstellung der Welle 2 aus dem Vollen herausgearbeitet wird. Denkbar ist auch eine mehrteilige Ausführung der Welle 2, wobei der Abschnitt 12 nachträglich auf der Welle 2 angebracht wird.

Die erste Druckscheibe 9 und die zweite Druckscheibe 11 sind im Wesentlichen koaxial zu der Welle 2 angeordnet. Zwischen der ersten Druckscheibe 9 und der zweiten Druckschreibe 11 sind ein, vorzugsweise mehrere Reibelemente 10 angeordnet, die der reibschlüssigen Verbindung des treibenden Kupplungsteils 1 und der Welle 2 dienen. Die Reibelemente 10 stehen über eine auf deren äußerem Umfang angeordneten Außenverzahnung 13 mit einem an dem treibenden Kupplungsteil 1 angeordneten Zahnkranz 14 in Eingriff. Weiterhin ist zwischen der ersten Druckscheibe 9 und der zweiten Druckscheibe 11 mindestens eine Feder 16 angeordnet, deren Federkraft die erste Druckscheibe 9 und die zweite Druckscheibe 11 in der ersten Position der Kupplung derart zueinander beabstandet, dass zwischen der ersten Druckscheibe 9, der zweiten Druckscheibe 11 und den Reibelementen 10 kein Reibschluss auftritt, somit der Drehmomentfluss unterbrochen ist.

Die erfindungsgemäße Kupplung ist in der vorliegenden Ausführungsform als hydraulisch betätigbare Reibkupplung ausgeführt. Ebenso ist die Verwendung einer pneumatisch betätigbaren Kupplung denkbar. Um die Kupplung aus der ersten Position in die zweite Position zu überführen, werden die Schaltmittel hydraulisch betätigt. Hierzu wird ein mit Druck beaufschlagtes Medium durch eine in dem Inneren der Welle 2 angeordnete Zuleitung 17 in den zwischen dem Zylinder 4 und dem Kolben 5 gebildeten Hohlraum eingeleitet. Als Medium kommt insbesondere Hydrauliköl zum Einsatz, das über einen vorzugsweise an der Stirnseite der Welle 2 angeordneten Anschluss 18 eingebracht wird.

Der sich in dem Inneren des Hohlraumes aufbauende Druck bewirkt, dass der Kolben 5 ausgehend von der Abtriebsseite in Richtung des treibenden Kupplungsteils 1 innerhalb des Zylinders 4 verschoben wird. Der Kolben 5 gleitet auf der Oberfläche der Welle 2 und presst sich gegen das Übertragungselement 6. Dabei wird eine dem Öldruck proportionale Kraft von dem Kolben 5 auf das Übertragungselement 6 übertragen und von diesem auf die erste Druckscheibe 9.

Die erste Druckscheibe 9 wird entgegen der Federkraft in Richtung des treibenden Kupplungsteils 1 mit einer Druckkraft beaufschlagt und drückt die Reibelemente 10 gegen die zweite Druckscheibe 11. Dadurch kommt es zwischen der ersten Druckscheibe 9, der zweiten Druckscheibe 11 und den Reibelementen 10 zu einer reibschlüssigen Verbindung. Das von einem Motor oder dergleichen über das treibende Kupplungsteil 1 eingeleitete Drehmoment wird über die mit dem Zahnkranz 14 in Eingriff stehende Außenverzahnung 13 auf die Reibelemente 10 übertragen und durch den Reibschluss auf die zweite Druckscheibe 11. Durch die formschlüssige Verbindung der zweiten Druckscheibe 11 mit dem Abschnitt 12 wird das Drehmoment auf die Welle 2 übertragen und steht auf der Abtriebsseite der Kupplung zur Verfügung. Zur Dämpfung von Drehschwingungen, die von der Schwungradseite des Motors auf die Kupplung übertragen werden, weist die treibende Kupplungsseite eine elastische Kupplung auf, die dieser vorgeschaltet ist.

### Bezugszeichenliste

- 1: Kupplungsteil
- 2: Welle
- 3: Kupplungsgehäuse
- 4: Zylinder
- 5: Kolben
- 6: Übertragungselement
- 7: Dichtung
- 8: Sicherungsring
- 9: erste Druckscheibe
- 10: Reibelemente
- 11: zweite Druckscheibe
- 12: Abschnitt
- 13: Außenverzahnung
- 14: Zahnkranz
- 15: Verbindungselement
- 16: Feder
- 17: Zuleitung
- 18: Anschluss

## Patentansprüche

1. Kupplung, insbesondere für Baumaschinenantriebe, umfassend:
- einen treibenden Kupplungsteil (1) und eine Welle (2),
- ein Kupplungsgehäuse (3), das den treibenden Kupplungsteil (1) und die Welle (2) zumindest abschnittsweise umgibt, sowie
- Schaltmittel, mittels derer die Kupplung aus einer ersten Position, in der zwischen dem treibenden Kupplungsteil (1) und der Welle (2) keine kraftschlüssige Verbindung besteht, in eine zweite Position überführbar ist, in der der treibende Kupplungsteil (1) und die Welle (2) kraftschlüssig miteinander verbunden sind,
**dadurch gekennzeichnet, dass**
die Schaltmittel einen Zylinder (4), einen Kolben (5) sowie ein Übertragungselement (6) umfassen, die im Wesentlichen koaxial zu der Welle (2) angeordnet sind, wobei die Schaltmittel unmittelbar auf einem Abschnitt der Welle (2) angeordnet sind, wobei die Schaltmittel sich einander zumindest abschnittsweise überlappend angeordnet sind.

2. Kupplung nach Anspruch 1, **dadurch gekennzeichnet, dass** die Schaltmittel zumindest teilweise entlang der Welle (2) axial verschiebbar sind.

3. Kupplung nach Anspruch 1 oder 2, **dadurch gekennzeichnet, dass** der Zylinder (4) einen im Wesentlichen U-förmigen Querschnitt aufweist.

4. Kupplung nach einem der Ansprüche 1 bis 3, **dadurch gekennzeichnet, dass** der Kolben (5) zumindest abschnittsweise von dem Zylinder (4) umgeben ist.

5. Kupplung nach einem der Ansprüche 1 bis 4, **dadurch gekennzeichnet, dass** das Übertragungselement (6) einen im Wesentlichen U-förmigen Querschnitt aufweist.

6. Kupplung nach einem der Ansprüche 1 bis 5, **dadurch gekennzeichnet, dass** das Übertragungselement (6) den Zylinder (4) und den Kolben (5) zumindest abschnittsweise umgibt.

7. Kupplung nach einem der Ansprüche 1 bis 6, **dadurch gekennzeichnet, dass** die Kupplung eine erste Druckscheibe (9) und eine zweite Druckscheibe (11) umfasst, die koaxial zu der Welle (2) angeordnet sind.

8. Kupplung nach Anspruch 7, **dadurch gekennzeichnet, dass** zwischen der ersten Druckscheibe (9) und der zweiten Druckscheibe (11) mindestens eine Feder (16) angeordnet ist.

9. Kupplung nach einem der Ansprüche 7 oder 8, **dadurch gekennzeichnet, dass** zwischen der ersten Druckscheibe (9) und der zweiten Druckscheibe (11) mindestens ein Reibelement (10) angeordnet ist.

10. Kupplung nach einem der Ansprüche 1 bis 9, **dadurch gekennzeichnet, dass** die Welle (2) einen im Wesentlichen flanschförmigen Abschnitt (12) aufweist.

11. Kupplung nach Anspruch 10, **dadurch gekennzeichnet, dass** der Abschnitt (12) in Umfangsrichtung angeordnete Bohrungen aufweist, die der Aufnahme von Verbindungselementen (15) dienen, mittels derer die zweite Druckscheibe (11) formschlüssig mit der Welle (2) verbindbar ist.

12. Kupplung nach einem der Ansprüche 7 bis 11, **dadurch gekennzeichnet, dass** die erste Druckscheibe (9) auf dem äußeren Umfang des Übertragungselementes (6) angeordnet ist.

13. Kupplung nach einem der Ansprüche 1 bis 12, **dadurch gekennzeichnet, dass** der Kolben (5) aus einer Rotgusslegierung besteht.

14. Kupplung nach einem der Ansprüche 1 bis 12, **dadurch gekennzeichnet, dass** der Kolben (5) aus einem nichtmetallischen Werkstoff besteht.

15. Kupplung nach einem der Ansprüche 1 bis 14, **dadurch gekennzeichnet, dass** der Kolben (5) in axialer Richtung der Welle (2) auf dieser gleitend verschiebbar ist.

16. Kupplung nach einem der Ansprüche 1 bis 15, **dadurch gekennzeichnet, dass** das Übertragungselement (6) gegenüber dem Zylinder (4) verschiebbar angeordnet ist.

17. Kupplung nach einem der Ansprüche 1 bis 16, **dadurch gekennzeichnet, dass** der Zylinder (4) und der Kolben (5) einen Hohlraum einschließen, in den durch eine in dem Inneren der Welle (2) angeordneten Zuleitung ein mit Druck beaufschlagtes Medium zuführbar ist.

18. Kupplung nach Anspruch 17, **dadurch gekennzeichnet, dass** die Welle (2) auf ihrer von dem Kupplungsgehäuse (3) abgewandten Seite einen Anschluss aufweist, der der Zufuhr des Mediums dient.

## Claims

1. Clutch, especially for construction machinery drive mechanisms, comprising:
- a driving clutch part (1) and a shaft (2),
- a clutch housing (3), which surrounds the driving clutch part (1) and the shaft (2) at least in sections, as well as
- switching means, by means of which the clutch can be transferred from a first position, in which no frictional connection exists between the driving clutch part (1) and the shaft (2), into a second position, in which the driving clutch part (1) and the shaft (2) are frictionally connected with each other,
**characterized in that**
the switching means comprise a cylinder (4), a piston (5) and a transmission element (6), which are arranged substantially coaxial to the shaft (2), the switching means being arranged directly on a section of the shaft (2) and the switching means being arranged in such a way that they mutually overlap at least in sections.

2. Clutch according to Claim 1, **characterized in that** the switching means are axially movable at least partially along the shaft (2).

3. Clutch according to Claim 1 or 2, **characterized in that** the cylinder (4) has a substantially U-shaped cross section.

4. Clutch according to one of Claims 1 to 3, **characterized in that** the piston (5) is surrounded by the cylinder (4) at least in sections.

5. Clutch according to one of Claims 1 to 4, **characterized in that** the transmission element (6) has a substantially U-shaped cross section.

6. Clutch according to one of Claims 1 to 5, **characterized in that** the transmission element (6) surrounds the cylinder (4) and the piston (5) at least in sections.

7. Clutch according to one of Claims 1 to 6, **characterized in that** the clutch has a first pressure disc (9) and a second pressure disc (11), which are arranged coaxially to the shaft (2).

8. Clutch according to Claim 7, **characterized in that** between the first pressure disc (9) and the second pressure disc (11) there is arranged at least one spring (16).

9. Clutch according to one of Claims 7 or 8, **characterized in that** between the first pressure disc (9) and the second pressure disc (11) there is arranged at least one friction element (10).

10. Clutch according to one of Claims 1 to 9, **characterized in that** the shaft (2) has a substantially flange-shaped section (12).

11. Clutch according to Claim 10, **characterized in that** the section (12) has bores arranged in the peripheral direction, which serve to receive connecting elements (15) by means of which the second pressure disc (11) can be positively connected to the shaft (2).

12. Clutch according to one of Claims 7 to 11, **characterized in that** the first pressure disc (9) is arranged on the outer periphery of the transmission element (6).

13. Clutch according to one of Claims 1 to 12, **characterized in that** the piston (5) consists of a red brass alloy.

14. Clutch according to one of Claims 1 to 12, **characterized in that** the piston (5) consists of a non-metallic material.

15. Clutch according to one of Claims 1 to 14, **characterized in that** the piston (5) is slidingly movable on the shaft (2) in the axial direction of the latter.

16. Clutch according to one of Claims 1 to 15, **characterized in that** the transmission element (6) is arranged movably relative to the cylinder (4).

17. Clutch according to one of Claims 1 to 16, **characterized in that** the cylinder (4) and the piston (5) enclose a cavity into which, through a supply line arranged inside the shaft (2), a pressurized medium can be fed.

18. Clutch according to Claim 17, **characterized in that** the shaft (2), on its side facing away from the clutch housing (3), has a connection serving for the supply of the medium.

## Revendications

1. Embrayage, notamment pour des systèmes d'entraînement d'engins de chantier, comprenant :
- une pièce d'embrayage (1) propulsive et un arbre (2),
- une carcasse d'embrayage (3), qui entoure la pièce d'embrayage (1) propulsive et l'arbre (2) au moins par passages, ainsi que
- des moyens de commutation, au moyen desquels l'embrayage peut être transféré d'une première position, dans laquelle aucune liaison par conjonction de force n'est constituée entre la pièce d'embrayage (1) propulsive et l'arbre (2), à une deuxième position, dans laquelle la pièce d'embrayage (1) propulsive et l'arbre (2) sont reliés l'une à l'autre par conjonction de force,
**caractérisé en ce que**
les moyens de commutation comprennent un cylindre (4), un piston (5) ainsi qu'un élément de transmission (6), qui sont disposés pour l'essentiel coaxialement à l'arbre (2), les moyens de commutation étant disposés directement sur une section de l'arbre (2), les moyens de commutation étant disposés de manière à s'enchevaucher les uns les autres au moins par passages.

2. Embrayage selon la revendication 1, **caractérisé en ce que** les moyens de commutation peuvent être déplacés au moins partiellement le long de l'arbre (2) dans la direction axiale.

3. Embrayage selon la revendication 1 ou 2, **caractérisé en ce que** le cylindre (4) présente une section transversale essentiellement en forme de U.

4. Embrayage selon une des revendications 1 à 3, **caractérisé en ce que** le piston (5) est entouré au moins par passages par le cylindre (4).

5. Embrayage selon une des revendications 1 à 4, **caractérisé en ce que** l'élément de transmission (6) présente une section transversale essentiellement en forme de U.

6. Embrayage selon une des revendications 1 à 5, **caractérisé en ce que** l'élément de transmission (6) entoure le cylindre (4) et le piston (5) au moins par passages.

7. Embrayage selon une des revendications 1 à 6, **caractérisé en ce que** l'embrayage comprend un premier disque de pression (9) et un deuxième disque de pression (11), qui sont disposés coaxialement à l'arbre (2).

8. Embrayage selon la revendication 7, **caractérisé en ce qu'**entre le premier disque de pression (9) et le deuxième disque de pression (11), au moins un ressort (16) est disposé.

9. Embrayage selon une des revendications 7 ou 8, **caractérisé en ce qu'**entre le premier disque de pression (9) et le deuxième disque de pression (11), au moins un élément de friction (10) est disposé.

10. Embrayage selon une des revendications 1 à 9, **caractérisé en ce que** l'arbre (2) présente une section (12) essentiellement en forme de bride.

11. Embrayage selon la revendication 10, **caractérisé en ce que** la section (12) présente des alésages disposés dans la direction circonférentielle, qui servent à recevoir des éléments de liaison (15), au moyen desquels le deuxième disque de pression (11) peut être relié par conjonction de forme à l'arbre (2).

12. Embrayage selon une des revendications 7 à 11, **caractérisé en ce que** le premier disque de pression (9) est disposé sur la circonférence externe de l'élément de transmission (6).

13. Embrayage selon une des revendications 1 à 12, **caractérisé en ce que** le piston (5) consiste en un alliage en bronze au zinc.

14. Embrayage selon une des revendications 1 à 12, **caractérisé en ce que** le piston (5) consiste en un matériau non métallique.

15. Embrayage selon une des revendications 1 à 14, **caractérisé en ce que** le piston (5) peut être déplacé dans la direction axiale de l'arbre (2) de manière à glisser sur celui-ci.

16. Embrayage selon une des revendications 1 à 15, **caractérisé en ce que** l'élément de transmission (6) est disposé de manière déplaçable par rapport au cylindre (4).

17. Embrayage selon une des revendications 1 à 16, **caractérisé en ce que** le cylindre (4) et le piston (5) définissent un espace creux, dans lequel un milieu pressurisé par une pression peut être introduit à travers une conduite d'amenée disposée à l'intérieur de l'arbre (2).

18. Embrayage selon la revendication 17, **caractérisé en ce que** l'arbre (2) présente un raccord sur son côté détourné de la carcasse d'embrayage (3), raccord qui sert à introduire le milieu.
